# FASCICULE DE BREVET EUROPEEN

(11) **EP 2 376 222 B1**
(45) Date de publication et mention de la délivrance du brevet: **20.03.2013**
(21) Numéro de dépôt: 10701118.1
(22) Date de dépôt: 12.01.2010
(51) Int. Cl.: B01J 23/14, B01J 31/02, C08G 63/08

(54) **Systèmes catalytiques pour la polymérisation d'esters cycliques.**
KATALYTISCHE SYSTEME ZUR POLYMERISATION VON ZYKLISCHEN ESTERN
CATALYTIC SYSTEMS FOR POLYMERISING CYCLIC ESTERS

(30) Priorité: 12.01.2009 BE 200900012
(43) Date de publication de la demande: 19.10.2011
(73) Titulaire: Futerro S.A., 7760 Escanaffles (BE)
(72) Inventeur: SIROL, Sabine, B-7060 Horrues (BE)
(74) Mandataire: Leyder, Francis
(86) Numéro de dépôt international: PCT/EP2010/050277
(87) Numéro de publication internationale: WO 2010/079233

(56) Documents cités:
- EP-B- 0 615 532
- WO-A-2008/037772
- US-A- 6 166 169
- US-A1- 2008 064 841

## Description

### Domaine de l'invention

La présente invention se rapporte à des nouveaux systèmes catalytiques pour la polymérisation d'esters cycliques par ouverture de cycle. En particulier, la présente invention se rapporte à de nouveaux co-catalyseurs, d'une grande efficacité et qui permettent d'accélérer la réaction de polymérisation. La présente invention couvre également un procédé de polymérisation par ouverture de cycle des esters cycliques, comme le L- lactide en présence de ces nouveaux systèmes catalytiques.

### Arrière-plan technologique

La polymérisation par ouverture de cycle est la voie la plus efficace pour l'obtention de (co)polyesters aliphatiques à partir de monomères choisis dans le groupe comprenant les lactides, de configuration L- ou D-, les lactones, les carbonates cycliques ainsi que les anhydrides cycliques. Ces polymères de synthèse suscitent un grand intérêt en tant que matériaux biodégradables.

Compte tenu de leurs propriétés intrinsèques, les polymères biodégradables sont devenus une alternative importante aux polymères synthétiques basés sur des composés issus de la pétrochimie, et de nombreuses avancées ont été accomplies tant du point de vue de la synthèse que de la transformation de ces matériaux. Ceux-ci sont d'ailleurs utilisés pour un grand nombre d'applications comme l'emballage et le textile. Parmi la variété de polymères biodégradables, l'acide polylactique (PLA) est un des plus couramment utilisé et étudié.

La polymérisation par ouverture de cycle s'effectue généralement en présence d'un système catalytique, et même parfois en présence d'un amorceur de type alcool ou amine. Les catalyseurs utilisés sont décrits dans la littérature, par example dans le document WO 2008/037772 A1 et notamment dans le brevet EP 615532, comme par exemple le SnCl₂, SnCl₄, SnBr₂, SnBr₄, Sn(2-éthylhexanoate)₂, Bi(2-éthylhexanoate)₃.
On peut également mentionner l'utilisation de bases de Lewis comme co-catalyseur, comme décrit dans le brevet US 6166169, et notamment le système Sn(Oct)₂/PPh₃.
Cependant, aucun de ces systèmes catalytiques utilisés dans les procédés de polymérisation, que ce soit en une ou deux étapes, ou par extrusion réactive, ne montrent une efficacité suffisante pour concurrencer significativement l'obtention des polymères usuels basés sur des composés issus de la pétrochimie.

Le document US 2008/0064841 A1 se rapporte à la préparation de ligands-polymères comprenant notamment des atomes de métaux liés par coordination à la chaîne polymère ; il décrit notamment un procédé pour la préparation de ligands-polymère PLA-OC₂N₂O, utilisant comme catalyseur de polymérisation de l'octoate d'étain en solution dans du diméthyle silane, ce qui ne se rapporte en rien à l'amélioration de l'éfficacité de la réaction de polymérisation du lactide en polylactide (PLA).

Il existe donc un besoin pour un système catalytique plus efficace pouvant être utilisé dans les réactions de polymérisation par ouverture de cycle.

### Objets de l'invention

La présente invention a donc pour objet un nouveau système catalytique pour les réactions de polymérisation par ouverture de cycle (ROP), qui soit significativement plus efficace que ceux habituellement utilisés.

La présente invention a également pour objet un nouveau système catalytique pour la polymérisation par ouverture de cycle du lactide, de configuration L- ou D-.

La présente invention se rapporte en particulier à des co-catalyseurs de type silane pouvant être utilisés avec n'importe quel catalyseur métallique habituellement utilisé dans la ROP.

Un autre objet de l'invention est un procédé de polymérisation d'esters cycliques par ouverture de cycle, utilisant un système catalytique dont le co-catalyseur est un composé de silane.

### Description détaillée de l'invention

Le système catalytique de l'invention pour la polymérisation d'ester cyclique, dont notamment le lactide, comprend (i) un catalyseur métallique de formule générale M(X1, X2,...,Xm)n, et (ii) un co-catalyseur de type organosilane aliphatique, choisi dans le groupe comprenant les alkylalkoxylanes et les cycloalkylalkoxysilanes.

La Demanderesse a maintenant trouvé de manière inattendue qu'en utilisant un co-catalyseur de type organosilane aliphatique choisi dans le groupe comprenant les alkylalkoxylanes et les cycloalkylalkoxysilanes, on pouvait significativement agir sur la vitesse de polymérisation de l'ester cyclique.

Selon la présente invention, le système catalytique comprend un catalyseur métallique de formule générale :

M(X1,X2, ...Xm)n

dans laquelle M est un métal choisi dans le groupe comprenant les éléments des colonnes 3 à 12 du Tableau Périodique des Eléments, ainsi que les éléments Al, Ga, In, TI, Ge, Sn, Pb, Sb et Bi ;
tandis que X1, X2, ... Xm sont chacun des substituants choisis dans le groupe comprenant les radicaux alkyles de 1 à 20 atomes de carbone, les radicaux aryles ayant de 6 à 30 atomes de carbone, les radicaux alkoxy ayant de 1 à 20 atomes de carbone, les radicaux aryloxy ayant de 6 à 30 atomes de carbone, et autres groupements oxyde, carboxylate, halogènure ainsi que des éléments du groupe 15 et/ou 16 du Tableau Périodique ; m et n sont des nombres entiers compris entre 1 et 6.

Dans le cadre de la présente invention, les radicaux alkyles, linéaires ou ramifiés comprennent de 1 à 20 atomes de carbone, de préférence de 1 à 12 atomes de carbone, et en particulier de 1 à 10 atomes de carbone ; à titre d'exemples on peut citer les radicaux méthyle, éthyle , propyle, isopropyle, n-butyle, t-butyle, pentyle, hexyle, éthylhexyle, octyle, nonyle et décyle.
On entend par radicaux aryles, des radicaux comprenant de 1 à 4 noyaux aromatiques, éventuellement fusionnés et comprenant de 6 à 30 atomes de carbone, de préférence de 6 à 10 atomes de carbone.

On entend par groupe alkoxy, un groupe de formule générale R-O-, où R représente un radicale alkyle ayant de 1 à 20 atomes de carbone. A titre d'exemples, on peut citer les groupes méthoxy, propoxy, éthoxy, isopropoxy, butoxy et analogues.

On entend par radicaux aryloxy, des radicaux de formule générale Ar-O-, où Ar représente un radicale aryle ayant de 6 à 30 atomes de carbone, et par exemple le radicale phényle.

En général, on conduit la polymérisation de l'ester cyclique en présence de ce type de catalyseur, qui est utilisé dans une quantité telle que le rapport molaire ester cyclique/ catalyseur est compris entre 100/1 et 10.000/1, de préférence entre 2.000 et 8.000/1 et plus préférentiellement entre 4.000 et 6.000/1.
A titre d'exemple de catalyseur approprié, on peut notamment citer les composés de Sn, Ti, Zr, Zn, et Bi ; de préférence un alkoxyde ou un carboxylate et plus préférentiellement Sn(Oct)₂, Ti(OiPr)₄, Ti(2-éthylhexanoate)₄, Ti(2-éthylhexyloxyde)₄, Zr(OiPr)₄, Bi(néodécanoate)₃ ou Zn(lactate)₂.

Selon la présente invention, le système catalytique comprend aussi et nécessairement un composé organosilane aliphatique choisi dans le groupe comprenant les alkylalkoxysilanes, et les cycloalkylalkoxy silanes. Ils comprennent en particulier les isopropylalkoxy silanes et les cyclohexylalkoxy silanes.
Ces composés de silanes aliphatiques peuvent être préparés par des méthodes connues de l'homme de l'art comme la réaction d'un silane halogéné avec un alcool.

Selon un autre mode de représentation de l'invention, les composés de silanes aliphatiques peuvent être représentés par la formule générale RR'Si(O-alkyle)₂, et plus particulièrement RR'Si(O-méthyle)₂, dans laquelle R et R' sont des radicaux égaux ou différents et choisis parmi les radicaux alkyles ou cycloalkyles ayant de 1 à 8 atomes de carbone.
A titre d'exemples plus particulièrement indiqués, on peut notamment citer le dicyclopentyldiméthoxy silane, le cyclohexyldiméthoxyméthyl silane ainsi que le diisobutyldiméthoxy silane et le t-butyléthyldiméthoxy silane.

La Demanderesse a également trouvé que pour obtenir les avantages de l'invention, le co-catalyseur devait être utilisé en une quantité telle que le rapport molaire co-catalyseur/catalyseur est compris entre 0,1 et 100 mol/mol et de préférence compris entre 0,25 et 1 mol/mol.

Le procédé de polymérisation de l'invention pour polymériser des esters cycliques et particulièrement des lactides, de configuration L- ou D-pour l'obtention de polylactide (PLA),se réalise en mettant en contact l'ester cyclique avec le système catalytique comprenant le catalyseur et le co-catalyseur, dans un réacteur, une extrudeuse ou tout autre type de réacteur approprié, à une température comprise entre 140 et 195°C.
Le procédé peut être conduit en continu ou en discontinu.

Selon un mode particulier de l'invention, appliquée à la polymérisation du lactide, on met en contact le lactide avec le catalyseur et le co-catalyseur dans un milieu constitué par du lactide fondu, en présence ou non d'un solvant comme le toluène, le tétrahydrofurane ou le dioxane.

Selon un mode de réalisation de l'invention, le procédé peut également comprendre l'utilisation d'un initiateur de type alcool ou amine. L'initiateur peut en effet être un alcool aliphatique ou aromatique de formule générale R(OH)s, dans laquelle s est un nombre entier valant 1 ou 2 et R est un radical alkyle ayant de 1 à 20 atomes de carbone, et de préférence de 1 à 12, ou encore un radical aryle ayant de 1 à 30 atomes de carbone.
L'initiateur peut également être une amine aliphatique ou aromatique de formule générale R(NH₂)t, dans laquelle t est un nombre entier valant 1 ou 2, et R est un radical alkyle ayant de 1 à 20 atomes de carbone, de préférence de 3 à 12 ou encore un radical aryle ayant de 1 à 30 atomes de carbone.
A titre d'exemples d'initiateurs, on peut citer l'isopropanol, le 1,4-butanediol, le 1-octanol, le 2-nonanol et le dodécanol, ainsi que l'isopropylamine et la 1,6-hexanediamine.
L'initiateur est généralement utilisé dans une quantité telle que le rapport molaire entre le lactide et l'initiateur est compris entre 50/1 et 1000/1, de préférence entre 100/1 et 750/1 et plus préférentiellement entre 200/1 et 600/1.

La présente invention est également décrite à l'aide des exemples ci-après, donnés à titre d'illustration et n'en constituant en aucun cas une limitation.

### Exemples 1 à 3

On a réalisé la polymérisation du L-Lactide en présence d'un système catalytique comprenant d'une part, de l'octoate d'étain (Sn(Oct)₂) comme catalyseur métallique et différents co-catalyseurs, ainsi que d'un amorceur, dans les conditions générales suivantes.
On a préparé des tubes sertis, d'une capacité de 50ml, que l'on a remplis, sous atmosphère inerte, avec 5g de L-Lactide, de Sn(Oct)₂, de co-catalyseur et d'amorceur ; les quantités de co-catalyseur, de catalyseur et d'amorceur sont telles que :
L-Lactide/amorceur = 300 mol/mol
L-Lactide/Sn = 4000-5000 mol/mol
Co-catalyseur/Sn = 0,5 ou 1 mol/mol
Amorceur : isopropanol ou octanol-1
On a utilisé chaque fois 1 ml de solution catalytique dans du toluène.

On a effectué la polymérisation à une température de 145°C et on a prélevé un tube toutes les 5 minutes pour mesurer la conversion du L-Lactide en polylactide. La conversion est mesurée sur le polymère recristallisé.

Conditions particulières :
Ex 1 : Co-catalyseur = dicyclopentyl dimethoxy silane (rapport molaire 1 mol/mol) ; L-Lactide/Sn = 4600 ; amorceur = isopropanol
Ex 2 : Co-catalyseur = cyclohexyl dimethoxymethyl silane (rapport molaire 1 mol/mol) ; L-Lactide/Sn = 4400 ; amorceur = octanol-1
Ex 3 : Co-catalyseur = idem Ex 2 mais rapport molaire 0,5 mol/mol ; L-Lactide/Sn = 4500 ; amorceur = octanol-1

Les résultats des conversions sont indiqués dans le Tableau 1 ci-dessous.

### Exemples comparatifs 1 et 2

On a réalisé la polymérisation du L-Lactide comme dans l'exemple 1 mais en utilisant le PPh₃ comme co-catalyseur (Ex comparatif 2) ou en l'absence de co-catalyseur (Ex comparatif 1)

Conditions particulières :
Ex comparatif 1 : L-Lactide/Sn = 4900 ; amorceur = isopropanol
Ex comparatif 2 : L-Lactide/Sn = 4400 ; amorceur = isopropanol

Les résultats des conversions sont également donnés dans le Tableau 1.

**Tableau 1 : Polymérisation du L-Lactide avec Sn(Oct)₂/cocatalyseur**

| **Exemple** | **Durée (min)** | **Conv. (%)** |
|---|---|---|
| Exemple comparatif 1 | 5 | 32.6 |
| | 10 | 60.1 |
| | 15 | 72.0 |
| | 20 | 90.7 |
| | 25 | 91.3 |
| | 30 | 92.2 |
| Exemple comparatif 2 | 5 | 44.4 |
| | 10 | 74.2 |
| | 15 | 84.7 |
| | 20 | 91.2 |
| 25 | 25 | 90.9 |
| | 30 | 92.7 |
| Exemple 1 | 5 | 74.2 |
| | 10 | 91.7 |
| | 15 | 91.4 |
| | 20 | 91.9 |
| | 25 | 90.8 |
| | 30 | 91.1 |
| Exemple 2 | 5 | 55.9 |
| | 10 | 1.1 |
| | 15 | 91.0 |
| | 20 | 91.9 |
| | .25 | 91.3 |
| | 30 | 92.8 |
| Exemple 3 | 5 | 71.1 |
| | 10 | 88.2 |
| | 15 | 91.0 |
| | 20 | 91.1 |
| | 25 | 90.5 |
| | 30 | 90.6 |

Conditions : L-Lactide = 5g, Lactide/amorceur = 300 mol/mol, Lactide/Sn = 4000-5000 mol/mol, Cocatalyseur/Sn = 0.5 ou 1 mol/mol, Toluène 1 ml, amorceur iPrOH ou octanol-1. La conversion est mesurée sur le polymère recristal lisé

### Exemples 4 et 5

On a suivi la procédure de préparation des tubes telle que décrite à l'exemple 1, mais avec les conditions particulières suivantes :
Ex 4 : Catalyseur = Zr(OiPr)₄.iPrOH avec rapport Lactide/catalyseur = 4500 mol/mol
   Co-Catalyseur : cyclohexyl dimethoxymethyl silane avec rapport Co-cata/cata = 1 mol/mol
   Amorceur : octanol-1 avec rapport Lactide/octanol = 300 mol/mol
Ex 5 : Catalyseur = Ti(2-éthylhexyl oxyde)₄ avec rapport Lactide/cata = 4900 mol/mol
   Les autres conditions restant les mêmes que celles décrites à l'exemple 4.

On a ensuite effectué la polymérisation du lactide à une température de 170°C, et l'on a mesuré la conversion du lactide en polylactide après 30 minutes.

Les résultats sont indiqués au Tableau 2

**Tableau 2 : Polymérisation du L-lactide avec Zr(OiPr)₄.iPrOH ou Ti(2-Ethylhexyloxide)₄ et donneur C**

| Exemple | Catalyseur | Conv. (%) |
|---|---|---|
| 4 | Zr(OiPr)₄.iPrOH | 89 |
| 5 | Ti(2-éthylhexyloxyde)₄ | 90 |

Conditions : L-Lactide = 5g, Lactide/octanol = 300 mol/mol, Lactide/catalyseur = 4000-5000 mol/mol, Donneur C/Catalyseur = 1 mol/mol, toluène 1 ml, 170°C, 30 min. La conversion est mesurée sur le polymère recristallisé.

## Revendications

1. Un système catalytique pour la polymérisation d'esters cycliques par ouverture de cycle comprenant (i) un catalyseur métallique de formule générale M(X1 X2 ... Xm)n, où M est un métal choisi dans le groupe comprenant les éléments des colonnes 3 à 12 du Tableau Périodique des Eléments ainsi que les éléments Al, Ga, In, Tl, Ge, Sn, Pb, Sb, et Bi, tandis que X1, X2 et Xm sont des substituants choisis dans le groupe comprenant les radicaux alkyles, aryles, alkoxy, aryloxy, carboxylate ou halogène, m et n sont des nombres entiers compris entre 1 et 6 et (ii) un co-catalyseur, **caractérisé en ce que** le co-catalyseur est du type organosilane aliphatique choisi dans le groupe comprenant les alkylalkoxysilanes et les cycloalkylalkoxysilanes.

2. Un système catalytique selon la revendication 1 **caractérisé en ce que** le composé organosilane aliphatique est choisi préférentiellement dans le groupe de composés de formule générale RR' Si(O-méthyle)₂, où R et R' sont des radicaux égaux ou différents, choisis parmi les radicaux alkyles ou cycloalkyles ayant de 1 à 8 atomes de carbone.

3. Un système catalytique selon la revendication 2 **caractérisé en ce que** le composé organosilane est choisi parmi le dicyclopentyldiméthoxy silane, le cyclohexyldiméthoxyméthyle silane, le diisobutyldiméthoxy silane et le t-butyléthyldiméthoxy silane.

4. Un système catalytique selon les revendications 1 à 3 pour la polymérisation de lactide comme ester cyclique.

5. Un système catalytique selon les revendications 1 à 4 **caractérisé en ce que** le catalyseur est choisi parmi le Sn(Octoate)₂, Ti(OiPr)₄, Ti(2-éthylhexanoate)₄, Ti(2-éthylhexyloxyde)₄, Zr(OiPr)₄, Bi(neodécanoate)₃ et Zn(lactate)₂, et le co-catalyseur est choisi parmi le cyclohexyldiméthoxyméthyle silane et le dicyclopentyldiméthoxy silane.

6. Procédé de polymérisation d'esters cycliques par ouverture de cycle, comprenant la mise en contact de l'ester cyclique dans des conditions de polymérisation en présence d'un catalyseur métallique de formule générale M(X1 X2 ... Xm)n, où M est un métal choisi dans le groupe comprenant les éléments des colonnes 3 à 12 du Tableau Périodique des Eléments ainsi que les éléments Al, Ga, In, Tl, Ge, Sn, Pb, Sb, et Bi, tandis que X1, X2 et Xm sont des substituants choisis dans le groupe comprenant les radicaux alkyles, aryles, alkoxy, aryloxy, carboxylate ou halogène, m et n sont des nombres entiers compris entre 1 et 6 et (ii) un co-catalyseur, **caractérisé en ce que** le co-catalyseur est du type organosilane aliphatique tel que décrit dans l'une quelconque des revendications 1 à 3.

7. Procédé selon la revendication 6 pour la polymérisation de lactide comme ester cyclique, **caractérisé en ce que** l'on met en contact le lactide à une température comprise entre 140 et 19b°C avec un système catalytique tel que décrit dans l'une quelconque des revendications 1 à 5 et optionnellement avec un initiateur de polymérisation.

8. Procédé selon les revendications 6 à 7, **caractérisé en ce que** l'on utilise (i) le catalyseur en une quantité telle que le rapport molaire ester cyclique/catalyseur est compris entre 100 et 10.000 mol/mol et de préférence entre 2.000 et 8.000 mol/mol et (ii) le co-catalyseur en une quantité telle que le rapport molaire co-catalyseur/catalyseur est compris entre 0,1 et 100 mol/mol et de préférence entre 0,25 et 1 mol/mol.

## Claims

1. A catalytic system for the polymerisation of cyclic esters via ring-opening comprising (i) a metal catalyst of general formula M(X1 X2 ... Xm)n, where M is a metal chosen from the group comprising the elements of columns 3 to 12 in the Periodical Table of Elements and the elements Al Ga, In, TI, Ge, Sn, Pb, Sb and Bi, whilst X1, X2 and Xm are substituents chosen from the group comprising the alkyl, aryl, alkoxy, aryloxy, carboxylate or halogen radicals, m and n are integers of between 1 and 6 and (ii) a co-catalyst, **characterized in that** the co-catalyst is of aliphatic organosilane type chosen from the group comprising alkylalkoxysilanes and cycloalkylalkoxysilanes

2. A catalytic system according to claim 1, **characterized in that** the aliphatic organosilane compound is preferably chosen from the group of compounds having the general formula RR'Si(O-methyl)₂ where R and R' are radicals, the same or different, chosen from among the alkyl or cycloalkyl radicals having 1 to 8 carbon atoms

3. A catalytic system according to claim 2, **characterized in that** the organosilane compound is chosen from among dicyclopentyldimethoxy silane, cyclohexyldimethoxymethyl silane, diisobutyldimethoxy silane and t-butylethyldimethoxy silane.

4. A catalytic system according to claims 1 to 3 for the polymerisation of lactide as cyclic ester.

5. A catalytic system according to claims 1 to 4 **characterized in that** the catalyst is chosen from among Sn(Octoate)₂, Ti(OiPr)₄, Ti(2-ethylhexanoate)₄, Ti(2-ethylhexyloxide)₄, Zr(OiPr)₄, Bi(neodecanoate)₃ and Zn(lactate)₂, and the co-catalyst is chosen from among cyclohexyldimethoxymethyl silane and dicyclopentyldimethoxy silane

6. A method for polymerising cyclic esters via ring-opening, comprising the contacting of the cyclic ester under polymerisation conditions in the presence of a metal catalyst of general formula M(X1 X2 ... Xm)n, where M is a metal chosen from the group comprising the elements from columns 3 to 12 of the Periodic Table of Elements and the elements Al, Ga, In, TI, Ge, Sn, Pb, Sb and Bi, whilst X1, X2 and Xm are substituents chosen from the group comprising the alkyl, aryl, alkoxy, aryloxy, carboxylate or halogen radicals, m and n are integers of between 1 and 6 and (ii) a co-catalyst, **characterized in that** the co-catalyst is of aliphatic organosilane type such as described in any of claims 1 to 3.

7. The method according to claim 6 for the polymerisation of lactide as cyclic ester, **characterized in that** the lactide is contacted at a temperature of between 140 and 195°C with a catalytic system such as described in any of claims 1 to 5 and optionally with a polymerisation initiator.

8. The method according to claims 6 to 7 **characterized in that** (i) the catalyst is used in a quantity such that the cyclic ester/catalyst molar ratio is between 100 and 10 000 mol/mol and preferably between 2 000 and 8 000 mol/mol and (ii) the co-catalyst is used in a quantity such that the co-catalyst/catalyst molar ratio is between 0.1 and 100 mol/mol and preferably between 0.25 and 1 mol/mol.

## Patentansprüche

1. Ein katalytisches System für die Polymerisation zyklischer Ester durch Ringöffnung, umfassend (i) einen Metallkatalysator der allgemeinen Formel M(X1 X2 ... Xm)n, wobei M ein Metall ist, ausgewählt aus der Gruppe, die die Elemente der Spalten 3 bis 12 des Periodensystems der Elemente sowie die Elemente Al, Ga, In, Tl, Ge, Sn, Pb, Sb und Bi umfasst, wogegen X1, X2 und Xm Substituenten sind, ausgewählt aus der Gruppe, die die Alkyl-, Aryl-, Alkoxy-, Aryloxy-, Carboxylat- oder Halogenradikale umfasst, m und n ganze Zahlen zwischen 1 und 6 inklusive sind und (ii) einen Co-Katalysator, **dadurch gekennzeichnet, dass** der Co-Katalysator vom Typ aliphatisches Organosilan ist, ausgewählt aus der Gruppe, die die Alkylalkoxysilane und die Cycloalkylalkoxysilane umfasst.

2. Ein katalytisches System nach Anspruch 1, **dadurch gekennzeichnet, dass** die aliphatische Organosilanverbindung vorzugsweise aus der Gruppe von Verbindungen der allgemeinen Formel RR' Si(O-methyl)2 ausgewählt ist, wobei R und R' gleiche oder unterschiedliche Radikale sind, ausgewählt aus den Alkyl- oder Cycloalkylradikalen mit 1 bis 8 Kohlenstoffatomen.

3. Ein katalytisches System nach Anspruch 2, **dadurch gekennzeichnet, dass** die Organosilanverbindung aus dem Dicyclopentyldimethoxysilan, dem Cyclohexyldimethoxymethylsilan, dem Diisobutyldimethoxysilan und dem t-Butylethyldimethoxysilan ausgewählt ist.

4. Ein katalytisches System nach den Ansprüchen 1 bis 3 für die Polymerisation von Lactid als cyclischer Ester.

5. Ein katalytisches System nach den Ansprüchen 1 bis 4, **dadurch gekennzeichnet, dass** der Katalysator aus dem Sn(Octoat)₂, Ti(OiPr)₄, Ti(2-ethylhexanoat)₄, Ti(2-ethylhexyloxyd)₄, Zr(OiPr)₄, Bi(neodecanoat)3 und Zn(lactat)₂ ausgewählt ist und der Co-Katalysator aus dem Cyclohexyldimethoxymethylsilan und dem Dicyclopentyldimethoxysilan ausgewählt ist.

6. Polymerisationsverfahren zyklischer Ester durch Ringöffnung, das die Kontaktierung des cyclischen Esters unter Polymerisationsbedingungen bei Anwesenheit eines Metallkatalysators der allgemeinen Formel M(X1 X2 ... Xm)n umfasst, wobei M ein Metall ist, ausgewählt aus der Gruppe, die die Elemente der Spalten 3 bis 12 des Periodensystems der Elemente sowie die Elemente Al, Ga, In, Tl, Ge, Sn, Pb, Sb und Bi umfasst, wogegen X1, X2 und Xm Substituenten sind, ausgewählt aus der Gruppe, die die Alkyl-, Aryl-, Alkoxy-, Aryloxy-, Carboxylat- oder Halogenradikale umfasst, m und n ganze Zahlen zwischen 1 und 6 inklusive sind und (ii) einen Co-Katalysator, **dadurch gekennzeichnet, dass** der Co-Katalysator vom Typ aliphatisches Organosilan ist, wie in einem der Ansprüche 1 bis 3 beschrieben.

7. Verfahren nach Anspruch 6 für die Polymerisation von Lactid als cyclischer Ester, **dadurch gekennzeichnet, dass** das Lactid bei einer Temperatur zwischen 140 und 195 °C inklusive mit einem katalytischen System wie in einem der Ansprüche 1 bis 5 beschrieben und optional mit einem Polymerisationsinitiator in Kontakt gebracht wird.

8. Verfahren nach den Ansprüchen 6 bis 7, **dadurch gekennzeichnet, dass** (i) der Katalysator in einer derartigen Menge, dass das molare Verhältnis cyclischer Ester/Katalysator zwischen 100 und 10.000 mol/mol inklusive und vorzugsweise zwischen 2.000 und 8.000 mol/mol ist und (ii) der Co-Katalysator in einer derartigen Menge, dass das molare Verhältnis Co-Katalysator/Katalysator zwischen 0,1 und 100 mol/mol und vorzugsweise zwischen 0,25 und 1 mol/mol inklusive ist, verwendet wird.
